# EUROPEAN PATENT SPECIFICATION

(11) **EP 0 869 837 B1**
(45) Date of publication and mention of the grant of the patent: **23.08.2000**
(21) Application number: 95942324.5
(22) Date of filing: 21.12.1995
(51) Int. Cl.: B01D 29/27, C02F 1/52

(54) **MEANS FOR PURIFICATION/FILTRATION OF HOUSEHOLD WASTE WATER AND THE LIKE**
MITTEL FÜR DIE REINIGUNG/FILTRATION VON HAUSHALTSABWASSER UND ÄHNLICHEN
PROCEDE DE PURIFICATION/FILTRAGE D'EAUX MENAGERES ET ANALOGUES

(30) Priority: 27.12.1994 NO 945041
(43) Date of publication of application: 14.10.1998
(73) Proprietor: BAKELITTFABRIKKEN A/S, N-0975 Oslo 9 (NO)
(72) Inventor: RINGDAL, Lars, deceased (NO); KOHLER, Jens, Christian, N-1430 As (NO); WESTLIE, Lars, N-1430 As (NO)
(74) Representative: Jacob, Reuben Ellis
(86) International application number: NO9500241
(87) International publication number: WO9620036

(56) References cited:
- EP-A- 0 687 493
- CH-A- 558 305
- CH-A- 655 496
- CH-A- 685 602
- NO-B- 135 681
- SE-B- 402 794

## Description

Used water must be dealt with in some way in order to ensure that infectious substances are not passed into the natural environment, thus causing pollution of drinking water sources, rivers, lakes, etc.

Until now towns and large country districts have been connected to central purification plants via pipelines. Such plants have been developed to receive water from approximately 2/3 of the country's houses, while approximately 1/3 have no connection to central purification plants and therefore have to find other solutions, since it is too expensive to provide long supply pipes to the central purification plants.

This invention concerns a purification method, preferably for scattered housing, based on the fact that all household waste water (grey water) undergoes a special purification process, wherein solid and liquid materials are separated through filtering bags/sacks, which are changed at specific intervals, e.g. once or twice per year, according to the number of people residing in the house.

It is stipulated that the thoroughly filtered/purified waste water (grey water) should be so pure that it can be subsequently re-used, e.g. as water for the water closet, garden watering or used in market gardens and for agricultural purposes.

In order to be able to re-use the filtered water it must undergo a subsequent filtration and treatment with U.V. radiation, thus ensuring that the water is absolutely pure and sterile. This treatment will be described in another patent application for filtration-tank-purification of waste water.

The purification of waste water is performed according to this invention by introducing the waste water from the household into a collecting pipe inside a distribution container which is located at the top of a large main container.

From the distribution container there are outlet pipes at different levels, which convey the water to open filtering bags/sacks which stand on a bottom plate a short distance up from the bottom of the main container. The filtering bags/sacks can consist of one or more bags/sacks inserted into one another, and which may be of woven materials, e.g. jute and/or perforated bags/sacks of different types of artificial materials. In such cases where several layers are used, the outer bag/sack must be of a larger diameter than the innermost one.

Solid particles are retained inside the bags while liquids will pass through and be collected down in the bottom of the main container.

From the distribution container the pipe in the lowest level will begin to fill one of several bags/sacks which stand extended in the main container. According to the invention it is very important that one bag/sack should be filled at a time, thus establishing good operating routines with regard to replacement of bags/sacks.

According to the invention it is stipulated that when the first bag/sack has been filled to the desired level, a device attached to the flexible pipe from the distribution container should be activated and swivels the pipe upwards with the result that the water level in the distribution container rises up to the pipe at the next level and bag/sack no. 2 begins to be filled. When this too is full, the same procedure will be repeated, and this pipe too is activated by a sensor and is swivelled upwards, whereupon bag/sack no. 3 begins to be filled.

According to the invention it is stipulated that a subsequent filtration of the water in the main container should be performed, the water filtering out on to a plate on which the sacks are standing and being conveyed out towards the outer walls of the main container, where there is placed on a projection a bag/hose which extends in the container and is filled with a filtrating mass through which the water passes before dripping down into the bottom of the container.

This hose which extends in the container will catch any suspended particles which may have passed through the filtering bag/sack.

According to the invention it is stipulated that this hose with filtration materials should also be replaced, e.g. annually together with the first-mentioned filtering bags/sacks.

The preferably round main container has a protrusion on one side and it is stipulated that in this protrusion there should be placed a pump which transfers the now purified water to a new purification process with further filtration through various purification media and a finishing treatment; a U.V. radiation of the water in order to make it absolutely sterile and ready for re-use.

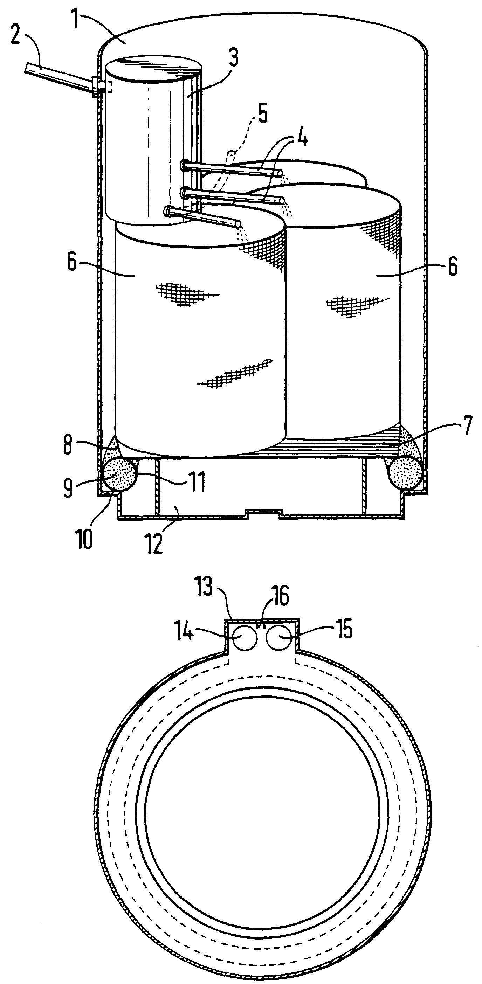

The invention can be implemented in several variants and the attached drawing illustrates an embodiment where 1 indicates the actual main container, 2 indicates a feed-in pipe for waste water to a distribution container 3. From this flexible pipes 4 are passed at several levels up to open filtering bags/sacks 6. A distribution pipe 5 is illustrated in the lowest position, and after the bag/sack has been filled to the required level, sensors will activate a lifting mechanism, causing the pipe to be swivelled upwards and thereby out of operation. The outlet pipe 4 at the next level takes over and begins filling a new bag/sack, and the process continues until all the extended bags in the main container have been filled.

The filtering bags/sacks 6 are standing with their bottoms against a plate 7 and the filtered water will be passed over the edges 8 of this plate and distributed approximately on the middle of a circumferential hose 9 with filtration media, which lie in a ring on a projection 10 with protrusions 11 around the main container 1.

From the inside the hoses will be supported by the outer edges of a container 12, which is placed on the bottom of the main container 1. On one side this has a protrusion 13, in which there are inserted a pump 14 and a fan 15 together with the necessary level sensors, cables, etc. 16.

## Claims

1. A purification/filtration plant for household waste water comprising :
- a distribution container (3) with an inlet (2) for the waste water and with several outlet pipes (4, 5) located at different levels of said container (3),
- several open filtering bags/sacks (6), each of said outlet pipes (4, 5) delivering waste water to a respective filtering bag/sack,
- sensor means and activating mechanism means operatively connected to said outlet pipes,
wherein said water is passed first from the lowest outlet pipe to the respective filtering bag/sack for separation of solid and liquid particles, when said filtering bag/sack is filled, the sensor and activating mechanism means put the said lowest outlet pipe out of operation and the next higher outlet pipe takes over and fills another filtering bag/sack and the process continues until all the filtering bags/sacks are full,
- the said distribution container (3) is located in the upper area of a main container (1)
- said filtering bags/sacks are supported with their bottom against a plate (7) located in the lower area of said main container (1), which plate along the circumference has a passage for water from said filtering bags/sacks to a bottom chamber, in which an outlet device for purified water is mounted.

2. A plant according to claim 1, characterized in that a woven/perforated hose (9) filled with filtering material is positioned in the passage between the plate and the bottom chamber (12).

3. A plant according to claim 1, characterized in that the outlet pipes (4,5) from the distribution container (3) are flexible/swivelable and can be lifted by means of the action from a sensor/floating device for lifting the end of the pipe up and out of operation when the filtering bag/sack is filled with solid particles.

4. A plant according to claim 1 or 2, characterized in that the main container (1) in the bottom area has a circumferential projection (10) and a built in container where protrusions (11) on the walls together form a bed for the wover/perforated hose (9).

5. A plant according to claim 1, characterized in that the plate 7 on which the filtering bags/sacks (6) are supported, leads the filtering water against a middle area of the passage around the plate.

6. A plant as specified in claims 1-5, characterized in that on one side of the main container there is a protrusion (13), where an exhaust fan (14), pump (15), cables and level sensors (13) are located.

7. A purification/filtration plant for household waste water as specified in claims 1-6, characterized in that the filtering bags/sacks consist of several bags/sacks placed on the outside of one another with increasing diameter which forms a desired space between the bags/sacks.

## Patentansprüche

1. Klär-/Filtrieranlage für Abwasser aus Haushalten, umfassend:
einen Verteilungsbehälter (3) mit einer Einlaßöffnung (2) für das Abwasser und mit mehreren Auslaßrohren (4, 5), welche an verschiedenen Niveaus des Behälters (3) angeordnet sind,
mehrere offene Filterbeutel/Filtersäcke (6), wobei jedes der Auslaßrohre (4, 5) Abwasser an einen jeweiligen Filterbeutel/Filtersack liefert,
eine Sensoreinrichtung und eine Aktiviereinrichtung, welche operativ mit den Auslaßrohren verbunden sind,
wobei das Wasser zuerst von dem untersten Auslaßrohr zu dem jeweiligen Filterbeutel/Filtersack zum Trennen fester und flüssiger Teilchen geführt wird, wobei bei gefülltem Filterbeutel/Filtersack die Sensoreinrichtung und die Aktiviereinrichtung das unterste Auslaßrohr außer Betrieb setzen und das nächst höhere Auslaßrohr einen weiteren Filterbeutel/Filtersack übernimmt und füllt und der Vorgang andauert, bis sämtliche Filterbeutel/Filtersäcke voll sind,
der Verteilungsbehälter (3) in dem oberen Bereich eines Hauptbehälters (1) angeordnet ist,
die Filterbeutel/Filtersäcke mit ihrem Boden gegen eine Platte (7) gestützt sind, welche in dem unteren Bereich des Hauptbehälters (1) angeordnet ist, wobei die Platte entlang des Umfangs einen Durchgang für Wasser von den Filterbeuteln/Filtersäcken zu einer Bodenkammer aufweist, in welcher eine Auslaßvorrichtung für gereinigtes Wasser eingebaut ist.

2. Anlage nach Anspruch 1, dadurch gekennzeichnet, daß ein mit Filtermaterial gefüllter gewebter/perforierter Schlauch (9) in dem Durchgang zwischen der Platte und der Bodenkammer (12) angeordnet ist.

3. Anlage nach Anspruch 1, dadurch gekennzeichnet, daß die Auslaßrohre (4, 5) von dem Verteilungsbehälter (3) flexibel/schwenkbar sind und mittels der Wirkung einer Sensor-/Schwimmvorrichtung angehoben werden können, um das Rohrende anzuheben und außer Betrieb zu setzen, wenn der Filterbeutel/Filtersack mit festen Teilchen gefüllt ist.

4. Anlage nach Anspruch 1 oder 2, dadurch gekennzeichnet, daß der Hauptbehälter (1) in dem Bodenbereich einen Umfangsvorsprung (10) und einen eingebauten Behälter umfaßt, wobei Vorsprünge (11) an den Wänden zusammen eine Auflage für den gewebten/perforierten Schlauch (9) bilden.

5. Anlage nach Anspruch 1, dadurch gekennzeichnet, daß die Platte (7) an welcher die Filterbeutel/Filtersäcke (6) gestützt sind, das Filterwasser gegen einen Mittelabschnitt des Durchgangs um die Platte führt.

6. Anlage nach Ansprüchen 1-5, dadurch gekennzeichnet, daß an einer Seite des Hauptbehälters ein Vorsprung (13) vorhanden ist, an welchem ein Entlüfter (14), eine Pumpe (15), Kabel und Niveau-Sensoren (13) angeordnet sind.

7. Klär-/Filtrieranlage für Abwasser aus Haushalten nach Ansprüchen 1-6, dadurch gekennzeichnet, daß die Filterbeutel/Filtersäcke aus mehreren Beuteln/Säcken bestehen, welche an der Außenseite voneinander mit zunehmendem Durchmesser angeordnet sind, wobei ein gewünschter Raum zwischen den Beuteln/Säcken gebildet wird.

## Revendications

1. Installation de purification/filtration destinée à des eaux usées domestiques comprenant :
- un récipient de distribution (3) comportant une entrée (2) destinée à l'eau usée et plusieurs tuyauteries de sortie (4, 5) situées à des niveaux différents dudit récipient (3),
- plusieurs sachets/sacs (6) de filtration ouverts, chacune desdites tuyauteries de sortie (4, 5) délivrant de l'eau usée à un sachet/sac de filtration respectif,
- un moyen de capteur et un moyen de mécanisme d'activation reliés de façon fonctionnelle auxdites tuyauteries de sortie,
dans laquelle ladite eau passe tout d'abord de la tuyauterie de sortie la plus basse vers le sachet/sac de filtration respectif en vue d'une séparation de particules solides et liquides, lorsque ledit sachet/sac de filtration est rempli, le moyen de capteur et de mécanisme d'activation placent ladite tuyauterie de sortie la plus basse hors service et la tuyauterie de sortie plus élevée suivante la remplace et remplit un autre sachet/sac de filtration et le processus se poursuit jusqu'à ce que tous les sachets/sacs de filtration soient remplis,
- ledit récipient de distribution (3) est situé dans la zone supérieure d'un récipient principal (1),
- lesdits sachets/sacs de filtration sont supportés avec leurs fonds contre une plaque (7) située dans la zone inférieure dudit récipient principal (1), laquelle plaque comporte le long de la circonférence un passage pour l'eau provenant desdits sachets/sacs de filtration vers une chambre inférieure, dans laquelle un dispositif de sortie destiné à de l'eau purifiée est monté.

2. Installation selon la revendication 1, caractérisée en ce qu'une manche tissée/perforée (9) remplie d'un matériau de filtration est positionnée dans le passage entre la plaque et la chambre inférieure (12).

3. Installation selon la revendication 1, caractérisée en ce que les tuyauteries de sortie (4, 5) provenant du récipient de distribution (3) sont flexibles/pivotantes et peuvent être levées au moyen de l'action d'un dispositif de capteur/flotteur destiné à relever l'extrémité de la tuyauterie vers le haut et hors service lorsque le sachet/sac de filtration est rempli de particules solides.

4. Installation selon la revendication 1 ou 2, caractérisée en ce que le récipient principal (1) dans la zone du fond comporte une saillie circonférentielle (10) et un récipient incorporé où des protubérances (11) sur les parois forment ensemble un lit pour la manche tissée/perforée (9).

5. Installation selon la revendication 1, caractérisée en ce que la plaque 7 sur laquelle les sachets/sacs de filtration (6) sont supportés, conduit l'eau de filtration contre une zone intermédiaire du passage autour de la plaque.

6. Installation selon les revendications 1 à 5, caractérisée en ce que d'un côté du récipient principal se trouve une protubérance (13) où un ventilateur d'évacuation (14), une pompe (15), des câbles et des capteurs de niveau (13) sont situés.

7. Installation de purification/filtration destinée à des eaux usées domestiques selon les revendications 1 à 6, caractérisée en ce que les sachets/sacs de filtration sont constitués de plusieurs sachets/sacs placés à l'extérieur les uns des autres avec un diamètre croissant qui forme un espace désiré entre les sachets/sacs.
